# EUROPEAN PATENT APPLICATION

(11) **EP 2 306 226 A1**
(43) Date of publication of application: **06.04.2011**
(21) Application number: 09171967.4
(22) Date of filing: 01.10.2009
(51) Int. Cl.: G02B 6/44, H02G 3/06

(54) **Holding device and assembly**

(71) Applicant: Nokia Siemens Networks Oy, 02610 Espoo (FI)
(72) Inventor: Soares Ferreira, Nuno Filipe, 2750-181, Cascais (PT); Antunes, Carlos, 2695-003, Bobadela (PT); Silva, Carlos Manuel, 1400-101, Lisboa (PT)

(57) **Abstract**

Holding device (100; 300) comprising: a plate (110; 310), a first fin (150; 350) on the plate (110; 310), a second fin (160; 360) on the plate (110; 310), wherein the second fin (160; 360) is disposed parallel and opposite to the first fin (150; 350), and a third fin (132; 332) on the plate (110; 310), wherein the third fin (132; 332) is disposed parallel to the first fin (150; 350) and wherein the third fin (132; 332) is displaced from a position that is between the first fin (150; 350) and the second fin (160; 360) along the lengthwise direction of the third fin (132; 332).

## Description

The present invention relates generally to a holding device for holding and guiding optical fibers and to an assembly of a first holding device and a second holding device.

Due to the high data transmission rates optical fibers find extensive industrial application, for example in telecommunication or automotive industry. For example, optical fibers are used in optical platforms. Usually, an optical unit comprises a chassis, wherein several optical elements are mounted, such as application modules. The optical elements are connected by cables and fibers, such as optical fibers. Due to industrial requirements towards increased module density, the chassis becomes smaller and smaller while the number of optical elements and optical fibers is increased. Depending on the technical application, there may be up to 100 fibers or even more, that have to be stored in a chassis, each fiber having a length of up to 1 meter. Thus, there is only little space for running optical fibers between the optical elements.

To connect the different optical elements, the fibers have to be bent. Thereby, a bending radius of the fibers may not be lower than a minimum bending radius. Otherwise, the optical fibers may be damaged or the performance of the fibers may be decreased as a result of optical loss. The minimum bending radius depends on the kind of optical fiber and is between 25 and 30 mm (millimeter) for example.

It is therefore an object of the invention to provide a compact holding device for a variable number of fibers wherein the holding device assures a minimum bending radius of the fibers.

This object of the invention is achieved by the features of the independent claims. Further embodiments are specified in the dependent claims.

The object of the invention is achieved by a holding device comprising a plate, a first fin on the plate, a second fin on the plate, wherein the second fin is disposed parallel and opposite to the first fin, and a third fin on the plate, wherein the third fin is disposed parallel to the first fin and wherein the third fin is displaced from a position between the first fin and the second fin along the lengthwise direction of the third fin. The plate has a main surface, that is preferably planar, comprising a length and a width. The plate further has a height, wherein the height is much smaller than the length and the width. The fins are elongated bodies disposed on the main surface of the plate. The second fin is disposed opposite to the first fin, i.e. the second fin has a side with a surface normal, wherein the surface normal points to a side of the first fin.

The holding device provides a possibility of guiding and retaining optical fibers in a fixed position inside a chassis. The retaining effect will be obtained with the aid of a second holding device, for example a top holding device. The fins guide the fibers inside the holding device and keep them in place. Furthermore, the fins provide a possibility for attaching a top on the holding device, thereby providing a closed channel for guiding the fibers and further protecting the fibers.

The fins are part of a connector system for attaching two devices in a form fitting or force fitting fashion. The connector system comprises two locking elements: a locking receptacle and a locking part. The locking receptacle comprises at least a first body and a second body being disposed spaced apart but substantially parallel to each other. The first body and the second body may be a fin or may have any other appropriate geometry for example. The locking part comprises at least one main body. Alternatively, the locking part can comprise two or even more main bodies. The main body of the locking part may be a fin or a stud for example. The main body of the locking part can be inserted between the first body and the second body of the locking receptacle. For example, a force fitting connection can be achieved by a clamping force between the main body(ies) of the locking part and the first and second body of the locking receptacle. Depending on how deep the locking part is inserted in the locking receptacle, an attaching in different positions is possible, and thus different capacities are achieved. The clamping connection between locking receptacle and locking part is a detachable connection.

Alternatively, the connector system may also provide a form fitting connection. Therefore, for example, the locking receptacle may further comprise at least one snap-in element. The snap-in element is disposed on the first body or the snap-in element is disposed on both the first and second body. The snap-in element comprises a recess or a protrusion. The recess may be a hole through the body, for example a circular hole, a concave or wedge-shaped notch or a spherical segment for example. The protrusion may be a spherical segment, a convex protrusion or a wedge for example.

The locking part may also comprise a snap-in element being the counterpart to the snap-in element as described for the locking receptacle. The counterpart fits to the snap-in element, thereby forming a contact to the snap-in element in at least one point. For example, if the snap-in element of the locking receptacle is a recess in form of a spherical segment, the counterpart could be a protrusion in the form of a spherical segment.

For attaching, the locking part is inserted in the locking receptacle. The first and second body of the locking element elastically bend away from each other during inserting until the snap-in element engages with the snap-in counterpart, due to the protrusion disposed on either the locking part or the locking receptacle. Then, the first and second body return in their original positions and the locking part is attached to the locking receptacle in a form fitting fashion.

The form fitting connection between the locking elements can be a detachable connection, that means that the locking elements are adapted to being attached and detached several times without being damaged, for example up to 50 times. A detaching can be realised by pulling one locking element away from the other locking element. When exceeding a threshold force during pulling, the first body and the second body elastically bend away from each other thereby enabling the detaching. After detaching the first body and the second body of the locking receptacle are in their original position again.

The first fin may run along a curve on the plate. Thus, the second and third fin may also run along a curve on the plate because they are parallel to the first fin. Thereby, the optical fibers in the holding device are guided along the curve and it is assured, that the fibers are bent along an intended run without being damaged.

The first fin may be disposed on the plate along a part of a first circle, the second fin may be disposed on the plate along a part of a second circle being concentric to the first circle, and the third fin may be disposed on the plate along a part of a third circle being concentric to the first circle; wherein the third fin is displaced in circumferential direction of the third circle. The part of the circle is a circular arc with a central angle and a radius. By guiding the fibers along a circular arc, a constant bending of the fibers can be achieved. By defining the bending radius it can be assured that the fibers are bent with a clearly defined radius, especially a bending radius of not less than 25 mm can be assured.

For example, the first circle may have a first radius, the second circle may have a second radius and the third circle may have a third radius, wherein the first radius is smaller than the third radius and the third radius is smaller than the second radius. Alternatively, the second radius may be smaller than the third radius and the third radius may be smaller than the first radius. Thus, the third fin is disposed along a circular arc having a radius between the radius of the first and second circular arc. Such an arrangement of first, second, and third fin provides an easy realisation of a holding device, that can be mounted to an identical holding device, thereby forming a bent channel for guiding fibers.

The holding device may further comprise a fourth fin being disposed on the plate parallel to the first fin and opposite or side by side to the third fin. Thus the channel for guiding fibers is bordered on one side by the fourth fin and on the opposite side by the third fin. Thus, the fourth fin provides a better guiding of the optical fibers.

The first fin and the second fin are spaced apart by a first distance and the third fin and the fourth fin are spaced apart by a second distance. The distance between the first and second fin is the distance between a side of the first fin facing the second fin and a side of the second fin facing the first fin. The second distance between the third and the fourth fin is accordingly defined.

For example, the second distance may be at least several times greater than the first distance. The second distance may be at least three times the first distance, or the second distance may be at least four times the first distance, or the second distance may be X times the first distance, wherein X is a number greater than 3, for example. Such a holding device has a channel for guiding fibers between the third and fourth fin. The first and second fin provide the locking receptacle for inserting the locking part when mounting a top to the holding device. Due to the different distances, it is easy to realize where to insert the fibers and where not.

For example, the first distance may be equal to the width of the third fin transversely to the lengthwise direction of the fin. Thus, the third fin would exactly fit into the distance between first and second fin. Therefore, an identical holding device could easily be mounted to the holding device, inserting the third fin between the first and second fin, thereby forming a force fitting connection.

Alternatively, the second distance may be in a range of 70 percent to 99 percent of the first distance. In this case, the channel for guiding fibers is disposed between the first and second fin and between the third and fourth fin. This holding device provides a very simple arrangement of fins that have simultaneously a guiding function and a locking function for attaching a top on the holding device.

For example, the first distance may be equal to the second distance plus the width of the third fin plus the width of the fourth fin. Accordingly, the third and fourth fin would exactly fit between the first and second fin. Therefore, an identical holding device could easily be mounted to the holding device, inserting the third fin and fourth fin between the first and second fin, thereby forming a force fitting connection.

The holding device may further comprise at least a first snap-in recess and a second snap-in recess, wherein the first snap-in recess and the second snap-in recess are disposed on a side of the first fin, the side facing the second fin. The first and second snap-in recess provide a possibility of fixing the top in different positions on the holding device. The distance between the first snap-in recess and the plate may be different than the distance between the second snap-in recess and the plate. Thus, a top of the holding device can be attached in a first or second height above the plate, thereby forming a channel with a first or a second capacity for fibers.

The holding device may further comprise a snap-in protrusion disposed on a side of the third fin, wherein the holding device can be mounted to an identical second holding device, the second holding device being turned upside down, wherein, when mounted, the first snap-in recess or the second snap-in recess of the holding device is connected to the snap-in protrusion of the second holding device in a form fitting fashion, and the snap-in protrusion of the holding device is connected to the first snap-in recess or the second snap-in recess of the second holding device in a form fitting fashion. In detail, such a holding device can also be used as the top holding device. An additional top is not necessary but two identical parts can be used. Thereby, the mounting of the holding device becomes more easily and a production of the holding device is extremely cost efficient because only one kind of device has to be produced.

Alternatively, the position of the snap-in protrusion and the snap-in recesses may be interchanged, i.e. a snap-in protrusion is disposed on a side of the first fin, the side facing the second fin, and at least a first snap-in recess and a second snap-in recess are disposed on a side of the third fin, wherein the holding device can be mounted to an identical second holding device as described above. Such a holding device with interchanged position of the snap-in protrusion and snap-in recesses would have the same technical effects and advantages as described for the holding device above.

Alternatively, the holding device may comprise more than one snap-in protrusion, for example two protrusions. The holding device may comprise more than one column of snap-in recesses and more than one column of snap-in protrusions.

The holding device may further comprise a notch disposed at the free end of the fin comprising the first snap-in recess and the second snap-in recess. For example, if the first fin comprises the snap-in recesses, then the first fin may also comprise the notch. The notch provides a guiding for the snap-in protrusion, when a top is mounted to the holding device. The snap-in protrusion of the top slides in the notch and is thereby directed to the snap-in recesses. Thereby, the mounting of a top (for example an identical holding device) to the holding device becomes more easy.

For example, the holding device may further comprise an opening in the plate. The opening may be a hole, such as a circular hole or have any other appropriate form. The opening provides a possibility for attaching the holding device to a wall or another part of a chassis by use of a screw without damaging the holding device.

Furthermore, the holding device may further comprises a protrusion extending from the plate and facing away from the first fin. Thus, the protrusion is disposed on the side of the plate opposite the fins. When the holding device is attached to a wall of a chassis, for example, such a protrusion can be inserted in a matching recess in the wall. The protrusion may be a pin or a stud and facilitates an easier attachment of the holding device to the wall and further allows a stationary and non-turnable attachment of the holding device with only one screw.

The object of the invention is further achieved by an assembly of a first holding device comprising a first plate, a first fin on the plate and a second fin on the plate, wherein the second fin is disposed parallel and opposite to the first fin and a second holding device comprising a second plate and at least one fin on the second plate; wherein the second holding device can be mounted to the first holding device, wherein, when mounted, the at least one fin is disposed between the first fin and the second fin of the first holding device and the at least one fin is in contact with at least the first fin, thereby forming a channel between a part of the first plate and a part of the second plate.

Such an assembly provides a very simple realization of a channel for guiding fibers. For example, the first holding device may be attached to a chassis, fibers are inserted in the first holding device and the second holding device is mounted on top of the first holding device. Thereby, the fibers are guided and kept in a fixed postion inside the chassis. The channel may run along a curve along the first plate of the first holding device and the second plate of the second holding device. Such a curved channel provides a guiding for optical fibers and prevents the optical fibers from being folded or bent with a radius smaller than the minimum bending radius.

For instance, the second holding device may further comprise an additional fin on the second plate, wherein the additional fin is disposed parallel and opposite to the at least one fin; wherein, when mounted to the first holding device, the additional fin is not in contact with the second fin or the additional fin is in contact with the second fin. The additional fin forms a border of the channel and provides a better guiding of the fibers. Moreover, in case the additional fin is in contact with the second fin, the additional fin is part of the locking part as described above and thus improves the stability of the assembly.

The first holding device may further comprise at least a first snap-in recess and a second snap-in recess being disposed on the first fin on a side facing the second fin and the second holding device may further comprise a snap-in protrusion being disposed on a side of the at least one fin, wherein the second holding device can be mounted to the first holding device in a form fitting fashion in at least two different positions, wherein the snap-in protrusion engages in the first snap-in recess or the snap-in protrusion engages in the second snap-in recess. The form fitting connection guarantees an exactly positioned mounting of the first and second holding device. Moreover, the snap-in recesses provide an easy way of adapting the channel height depending on the number of fibers to be held. In the first position the channel formed by the first and second holding device has a first height and accommodates for a first capacity of fibers. In the second position the channel has a second height and accommodates for a second capacity of fibers that is different to the first capacity. For example, the channel having a first height may have a capacity of up to 120 optical fibers, wherein the channel having a second height accommodates for up to 85 fibers. Other channel capacities can easily be realized by providing further snap-in recesses or snap-in protrusions in different positions.

Alternatively, the snap-in protrusion and the snap-in recess may be interchanged, i.e. the first holding device comprises a snap-in protrusion being disposed on a side of the first fin, the side facing the second fin and the second holding device comprises at least a first snap-in recess and a second snap-in recess being disposed on a side of the at least one fin. The first and second holding device can be assembled as described above, i.e. the second holding device can be mounted to the first holding device in a form fitting fashion in at least two different positions, wherein the snap-in protrusion engages in the first snap-in recess or the snap-in protrusion engages in the second snap-in recess. Accordingly, the same advantages as described above can be achieved.

For example, the first holding device of the assembly may be a holding device as described above and the second holding device of the assembly may also be a holding device as described above. Thus, the same technical effects and advantages as described for the holding device is also realized for the assembly of a first and second holding device.

The first holding device and the second holding device of the assembly may be structurally identical parts, i.e. identical in dimensions or shape of the fins. For example, the first holding device and the second holding device may have the same locking elements. Structurally identical does not necessarily mean that the first and second holding device have to be identical in material, colour, exact dimensions or technical irrelevant features, such as height of the plate or radius of the plate edges.

The foregoing has outlined rather broadly the features and technical advantages of embodiments of the present invention in order that the detailed description of the invention that follows may be better understood. Additional features and advantages of the embodiments of the invention will be described hereinafter. It should be appreciated by those skilled in the art that the conception and the specific embodiments disclosed may be readily utilised as a basis for modifying or designing other structures or processes for carrying out the same purpose of the present invention. It should also be realized by those skilled in the art that such equivalent constructions do not depart from the spirit and scope of the invention as set forth in the dependent claims.

For a more complete understanding of the present invention and the advantages thereof, reference is now made to the following description taking in conjunction with the accompanying drawings, in which:
- Figures 1 and 2: illustrate a perspective view of a first embodiment of a device holder,
- Figures 3 and 4: illustrate an assembly of a first device holder and second device holder according to the first embodiment in a first assem- bling position,
- Figures 5 and 6: illustrate an assembly of the first holding device and the second holding device in a second assembly position,
- Figure 7: illustrates a perspective view of a device holder according to a second embodiment, and
- Figure 8: illustrates a sectional view of the device holder according to the second embodiment along a section A-A of Figure 7.

The making and using of the presently preferred embodiments are discussed in detail below. It should be appreciated, however, that the present invention provides many applicable inventive concepts that can be embodied in a wide variety of specific context. The specific embodiments discussed are merely illustrative of specific ways to make and use the invention, and do not limit the scope of the invention. Moreover, the same reference signs refer to the same technical features if not stated otherwise. As far as "may" is used in this application it means the possibility of doing so as well as the actual technical implementation.

The present invention will be described with respect to the embodiments in a specific context namely an optical fiber device holder. The invention may also be applied, however, to other technical devices, for instance holding devices for fibers other than optical fibers or cables.

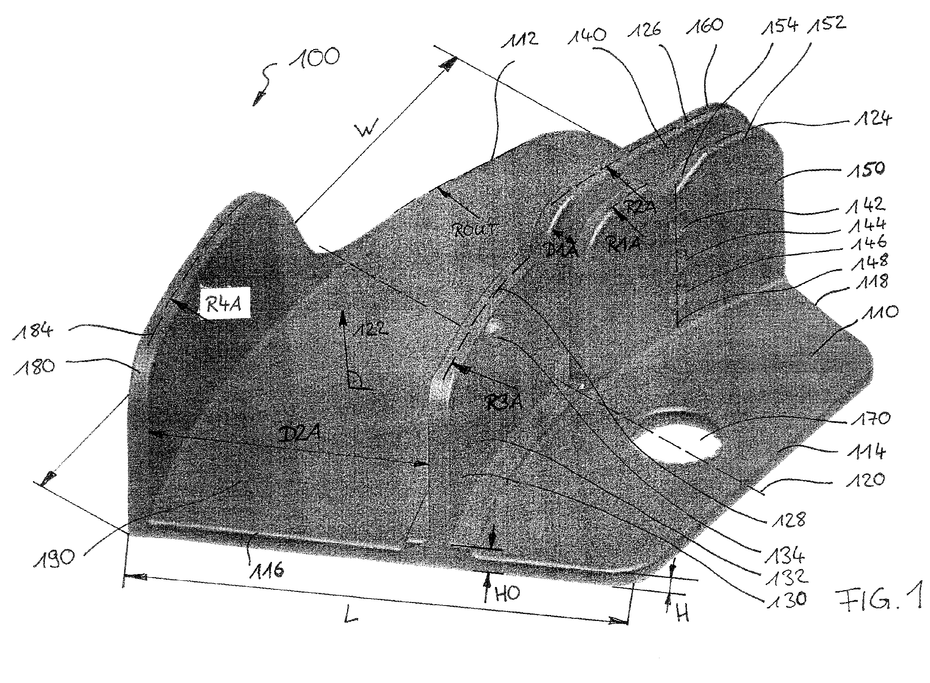

Figure 1 shows a perspective view of a holding device 100 according to a first embodiment of the invention. Holding device 100 comprises a plate 110. Plate 110 has a width W and a length L which is much greater than the plate height H. According to the first embodiment, plate 110 has substantially the form of a ring segment, i.e. plate 110 is bordered by an outer edge 112 running along a part of an outer circle with a radius ROUT, an inner edge 114 being straight, a front edge 116 connecting inner edge 114 and outer edge 112 and a rear edge 118 being disposed opposite to the front edge 116. Plate 110 is mirror symmetrical to an axis 120, wherein axis 120 runs from the middle of inner edge 114 to the middle of outer edge 112.

A first locking element 140 is disposed transversely on a main surface of plate 110 and protrudes substantially perpendicular to plate 110 in a first direction 122, i.e. an angle between the main surface of plate 110 and first locking element 140 is 85 to 90 degree. First locking element 140 comprises a first fin 150 and a second fin 160. First fin 150 is an elongated body disposed on plate 110 along a part of a first circle, i.e. lengthwise a first circular arc 124, having a first radius R1A. First circular arc 124 runs along a center line of first fin 150. First fin 150 runs from rear edge 118 to axis 120. First fin 150 is spaced apart from axis 120 by a distance in the range of 0.1 to 0.5 millimetres (mm).

Second fin 160 is disposed on plate 110 along a part of a second circle, i.e. a second circular arc 126, having a second radius R2A. The second circle is disposed concentrically to the first circle and first fin 150 and second fin 160 are disposed side by side, i.e. a side of fin 150 is opposite to a side of fin 160. Second fin 160 runs from rear edge 118 to axis 120. Second fin 160 is spaced apart from axis 120 by a distance in the range of 0.1 to 0.5 millimetres.

For instance, three snap-in recesses 142, 144, 146 are disposed on a side of first fin 150, the side facing second fin 160. According to the first embodiment, snap-in recesses 142, 144 and 146 are circular holes through fin 150. The centre of holes 142, 144 and 146 are disposed lengthwise an axis 148, wherein axis 148 is perpendicular to plate 110.

Holding device 100 further comprises a second locking element 130 being disposed transversely on plate 110. According to the first embodiment, second locking element 130 comprises a third fin 132. Third fin 132 is disposed on plate 110 and protrudes substantially perpendicular to plate 110 in the first direction 122. Third fin 132 is disposed on plate 110 along a part of a third circle, i.e. a third circular arc 128, having a third radius R3A, wherein the third circle is disposed concentrically to the first circle. Third fin 132 is displaced to first fin 150 in circumferential direction of the third circle. Third fin 132 runs from front edge 116 to axis 120. Third fin 132 is spaced apart from axis 120 by a distance in the range of 0.1 to 0.5 millimetres. According to the first embodiment, radius R3A of the third circle is smaller than second radius R2A and radius R3A is greater than first radius R1A.

For example, a snap-in protrusion 134 is disposed on a longitudinal side of third fin 132, wherein the side is adjoining plate 110. Snap-in protrusion 134 protrudes from third fin 132 in the direction that points to the centre of the circle with the radius R3A and is disposed at the free end of third fin 132. According to the first embodiment snap-in protrusion 134 is a spherical segment, for instance one half of a sphere.

According to the first embodiment, holding device 100 further comprises an opening 170 in plate 110. Opening 170 is a circular hole in plate 110 and provides the possibility of mounting the holding device to a surface of another device or to a chassis. For example, holding device 100 can be screwed to the chassis, a screw being disposed in opening 170. Opening 170 is centered on axis 120 and located between inner edge 114 and fins 132 and 150.

For instance, holding device 100 further comprises a guiding fin 180. Guiding fin 180 is disposed on plate 110 and protrudes perpendicular to plate 110 in first direction 122. Guiding fin 180 is disposed on plate 110 along a part of a fourth circular arc 184 having a fourth radius R4A, wherein fourth circular arc 184 is disposed concentrically to first circular arc 124. Fourth fin 180 is disposed side by side to third fin 132. Fourth fin 180 runs from front edge 116 along fourth circular arc 184 to axis 120.

First fin 150 and second fin 160 are spaced apart by a distance D1A. Third fin 132 and guiding fin 180 are spaced apart by a second distance D2A. Distance D1A is smaller than distance D2A, for instance smaller than 50 percent of distance D2A. According to the first embodiment, distance D1A is substantially equal to the width of third fin 132.

A bottom and sidewalls of a channel 190 are formed on holding device 100. Channel 190 is bordered by a part of plate 110, which is between outer edge 112 and fins 132, 160, by first locking element 140, by second locking element 130 and by guiding fin 180. Channel 190 runs along a circular arc on plate 110, the bending of the curve being defined by the bending of first locking element 140, second locking element 130 and guiding fin 180. When inserted into the holding device 100, optical fibers will run substantially parallel to the surface of plate 110 inside channel 190, for example optical fibers run from front edge 116 along channel 190 to rear edge 118 of holding device 100. The bending radius R2A of the second fin 160 defines a minimum bending radius of optical fibers inserted in holding device 100 and thus it can be assured that the optical fibers are bent with a bending radius not lower than a minimum bending radius. The bending radius R4A of the fourth fin 180 defines a maximum bending radius.

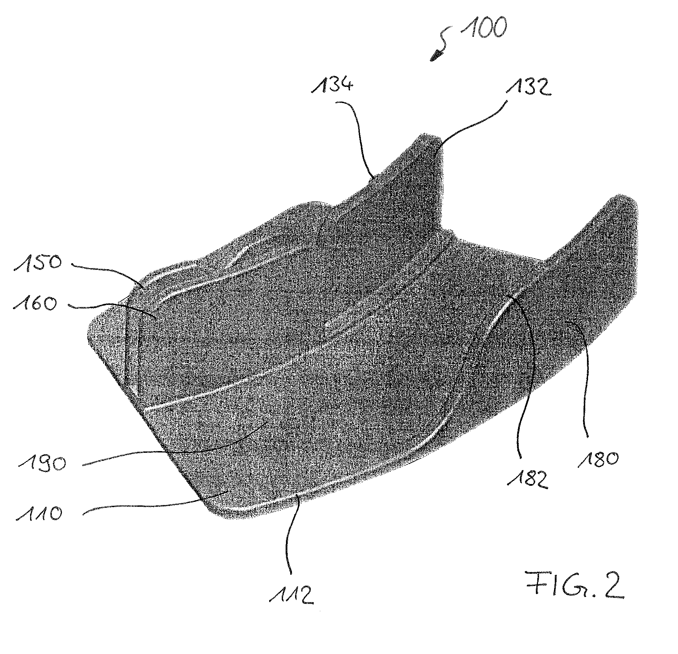

Figure 2 shows a perspective view of holding device 100 from a direction opposite to the direction of the view of Figure 1. As can be seen from Figure 2, guiding fin 180 is bordered by plate 110 and by an end face 182 facing away from plate 110. The distance of end face 182 to plate 110 along guiding fin 180 can be described as an sigmoid function. Thus, guiding fin 180 has a wavelike shape. It has been found by the inventors, that this shape is a highly effective shape of a guiding fin for guiding optical fibers. Nevertheless, guiding fin 180 may have any other appropriate shape for guiding fibers, for example guiding fin 180 may run along the complete outer edge 112 of plate 110, if fin 180 is reduced in height.

As can be seen from Figures 1 and 2, height H of plate 110 is substantially the same throughout plate 110 except an area at the third circular arc 128 and between first circular arc 124 and second circular arc 126. In this area the plate material is thicker for reasons of stability, for instance a height H0 is in the range of 110 to 200 percent of height H.

For instance, first fin 150 has a free end 152 facing away from plate 110, free end 152 having a notch 154. Notch 154 is disposed centered to axis 148 thereby providing a guide for inserting a snap-in protrusion in first locking element 140.

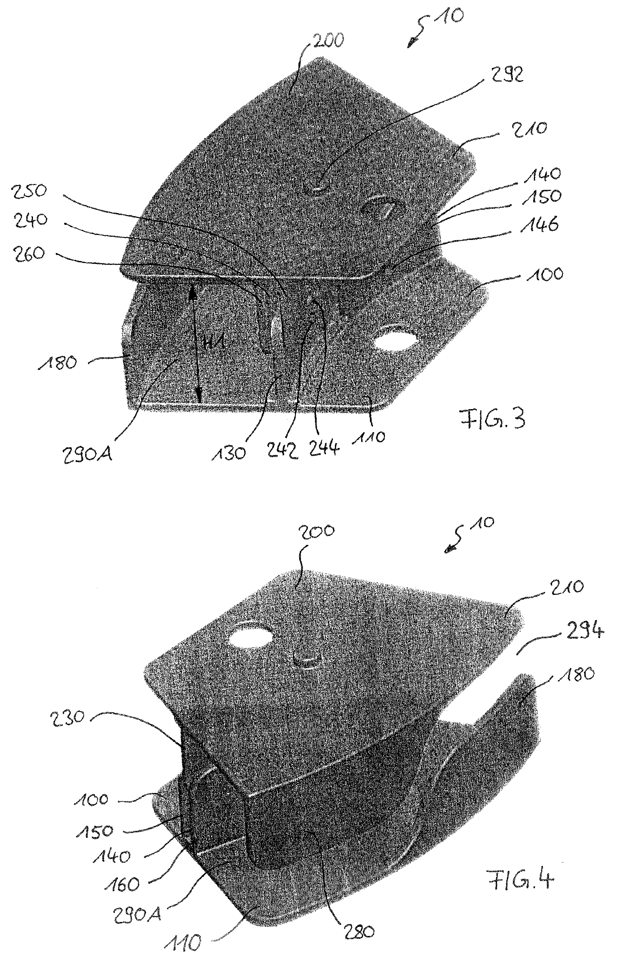

Channel 190 as shown in Figures 1 and 2 is bordered on three sides, i.e. channel 190 is bordered by second fin 160 and third fin 132, by a part of plate 110 and by guiding fin 180 according to the first embodiment. For a better guiding of optical fibers channel 190 can be bordered on a fourth side opposite to plate 110, when a top holding device is mounted to holding device 100. Holding device 100 is designed in such a way that holding device 100 can be attached to an identical holding device 200, see Figure 3, thereby forming a channel 290, that is bordered on four sides.

Figures 3 and 4 show an assembly of first holding device 100 and second holding device 200 in a first assembly position. Holding device 200 is a holding device identical to holding device 100. It is understood, that holding device 200 does not have to be completely identical to holding device 100. It is sufficient if holding device 200 is structurally identical to holding device 100, i.e. the locking elements of second holding device 200 fit to the locking elements 140 and 130 of holding device 100 and holding device 100 can be mounted without additional mountings to holding device 200.

According to Figure 3 and 4, two identical holding devices 100 and 200 are assembled. As can be seen in Figure 3, second locking element 130 of holding device 100 is inserted in first locking element 240 of second holding device 200, i.e. third fin 132 is located between first fin 250 and second fin 260. Thereby, snap-in protrusion 134 of holding device 100 engages in first snap-in recess 242 of holding device 200. Likewise as can be seen in Figure 4, second locking element 230 of second holding device 200 is inserted in first locking element 140 of holding device 100, i.e. first fin 232 is lo-locking element 230 of holding device 200 engages in first snap-in recess 142 of holding device 100. Thus, holding device 100 and holding device 200 are connected to each other in a form fitting fashion, thereby forming a channel 290A. Channel 290A is bordered by a part of plate 110, a part of plate 210, a part of first locking element 130 and second locking element 140 of holding device 100 and by a part of first locking element 230 and second locking element 240 of holding device 200. Furthermore, channel 290A is bordered by guiding fin 180 of holding device 100 and by guiding fin 280 of holding device 200. Therefore, channel 290A has a bottom, a top surface and sidewalls. There is a gap or slit 294 in the outer sidewall of channel 290A. The width of slit 294 is adaptable together with the height of channel 290A. Guiding fins 180 and 280 are arranged in a surface that corresponds to a cylindrical surface.

As can be seen in Figure 3, holding device 200 further comprises a protrusion 292 extending from plate 210 away from first locking element 240 in a direction opposite to first direction 122. Because holding device 200, as shown in Figure 3, is identical to holding device 100, it is understood that holding device 100 also comprises a protrusion (not shown in the drawings), for example protrusion 292 of holding device 200 as shown in Figure 3.

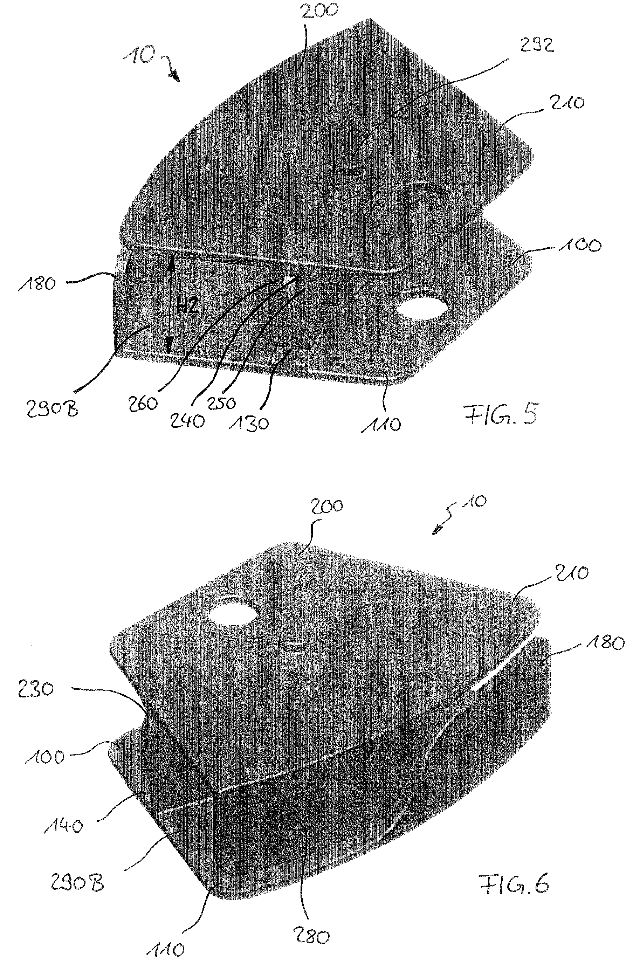

Channel 290A as shown in Figures 3 and 4 has a first height H1 between plate 110 and plate 210. In Figure 5 and Figure 6 a channel 290B is shown with a second height H2 between plate 110 and plate 210. As can be seen from Figures 5 and 6, height H2 is less than height H1, for example height H2 is in the range of 50 to 90 percent of height H1. Thus, the capacity of channel 290A as shown in Figures 3 and 4, is larger than the capacity of channel 290B as shown in Figures 5 and 6.

Second height H2 can be achieved by assembling holding device 100 and holding device 200 in a second position. In contrast to the first position shown in Figures 3 and 4, plate 110 is attached more closely to plate 210 in the second position. Second locking element 130 of holding device 100 is deeper inserted in locking element 240 of holding device 200, wherein snap-in protrusion 134 engages in the third snap-in recess 246 of holding device 200, for example. Likewise, second locking element 230 of holding device 200 is deeper inserted in first locking element 140 of holding device 100, wherein the snap-in protrusion of holding device 200 engages in third snap-in recess 146 of holding device 100, for example.

In both assembly positions, channel 290A, 290B is bordered on four sides thereby forming a guide for optical fibers. Therefore, height H1, H2 of channel 290A, 290B can be easily adapted, depending on the number of fibers.

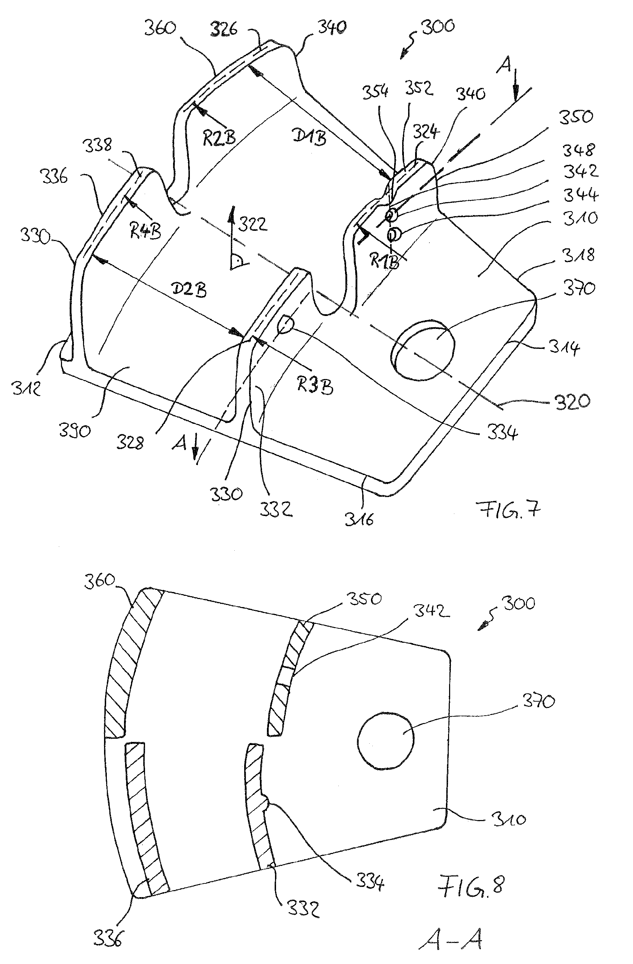

Figure 7 shows a perspective view of a holding device 300 according to a second embodiment of the invention. Holding device 300 comprises a plate 310 similar to plate 110, for example. Plate 310 has substantially the form of a ring segment, with an outer edge 312, an inner edge 314, a front edge 316 and a rear edge 318. Plate 310 is symmetrical to an axis 320, wherein axis 320 runs from the middle of inner edge 314 to the middle of outer edge 312.

A first locking element 340 is disposed transversely on a main surface of plate 310 and protrudes substantially perpendicular to plate 310 in a first direction 322, i.e. an angle between the main surface of plate 310 and first locking element 340 is in the range of 85 to 95 degrees, preferably 90 degrees. First locking element 340 comprises a first fin 350 and a second fin 360. First fin 350 is an elongated body disposed on plate 310 along a part of a first circle, i.e. lengthwise a first circular arc 324, having a first radius R1B. First circular arc 324 runs along a center line of first fin 350. First fin 150 runs from rear edge 318 to axis 320. First fin 350 is spaced apart from axis 320 by a distance in the range of 0.1 to 0.5 millimetres (mm).

Second fin 360 is disposed on plate 310 along a part of a second circle, i.e. a second circular arc 326, having a second radius R2B. Second fin 360 runs along a part of outer edge 312. The second circle is disposed concentrically to the first circle and first fin 350 and second fin 360 are disposed side by side, i.e. a side of fin 350 is opposite to a side of fin 360. Second fin 360 runs from rear edge 318 to axis 320. Second fin 360 is spaced apart from axis 320 by a distance in the range of 0.1 to 0.5 millimetres.

For example, two snap-in recesses 342 and 344 are disposed on a side of first fin 350, the side facing second fin 360. Snap-in recesses 342 and 344 may be similar to the snap-in recesses 142, 144 as already described above. In Figure 7 only two recesses are shown. It is understood, that the number of recesses can be changed, if more recesses are required, for example for providing several snap-in positions.

Holding device 300 further comprises a second locking element 330 being disposed transversely on plate 310. According to the second embodiment, second locking element 330 comprises two fins: a third fin 332 and an additional fourth fin 336. Third fin 332 is disposed on plate 310 and protrudes substantially perpendicular to plate 310 in the first direction 322. Third fin 332 is disposed on plate 310 along a part of a third circle, i.e. a third circular arc 328, having a third radius R3B, wherein the third circle is disposed concentrically to the first circle. Third fin 332 is displaced to first fin 350 in circumferential direction of the third circle. Third fin 332 runs from front edge 316 to axis 320. Third fin 332 is spaced apart from axis 320 by a distance in the range of 0.1 to 0.5 millimetres. According to the second embodiment, radius R3B of the third circle is smaller than second radius R2B and radius R3B is greater than first radius R1B.

According to the second embodiment, second locking element 330 of holding device 300 further comprises an additional fourth fin 336. Additional fin 336 is disposed on plate 310 and protrudes perpendicular to plate 310 in first direction 322. Additional fin 336 is disposed on plate 310 along a part of a fourth circular arc 338 having a fourth radius R4B, wherein fourth circular arc 338 is disposed concentrically to first circular arc 324. Additional fin 336 is disposed side by side to third fin 332. Additional fin 336 runs from front edge 316 along fourth circular arc 338 to axis 320. Fourth radius R4B is between first radius R1B and second radius R2B. If mounted to an identical holding device, second locking element 330 of holding device 300 is inserted in the first locking element of the identical holding device. Thereby, third fin 332 is in contact to first fin of the identical holding device and additional fin 336 is in contact to the second fin of the identical holding device. Snap-in protrusion 334 engages in a snap-in recess of the identical holding device and a form fitting connection is achieved.

First fin 350 and second fin 360 are spaced apart by a distance D1B. Third fin 332 and additional fin 380 are spaced apart by a second distance D2B. Distance D2B is smaller than distance D1B. According to the second embodiment, distance D1A is substantially equal to distance D2B plus the width of third fin 332 plus the width of additional fin 336. For example, the distance between first fin 350 and second fin 360 may be in the range of 8 to 15 millimeter.

A channel 390 is formed on holding device 300. Channel 390 is bordered by a part of plate 310, by first locking element 340 and by second locking element 330. Channel 390 is bordered on one side by first fin 350 and third fin 332 and on the other side by second fin 360 and additional fin 336. Channel 390 runs along a circular arc on plate 310, the bending of the arc being defined by the bending of first fin 350, second fin 360, third fin 332 and fourth fin 336. When inserted into the holding device, optical fibers will run substantially parallel to the surface of plate 310 inside channel 390, for example optical fibers run from front edge 316 lengthwise channel 390 to rear edge 318 of holding device 300.

For example, a snap-in protrusion 334 is disposed on a long side of third fin 332 as described for snap-in protrusion 134 of holding device 100.

According to the second embodiment, holding device 300 further comprises an opening 370 in plate 310 as already described for opening 170 of holding device 100.

Although not shown in the drawings, holding device 300 may also comprise a protrusion disposed on plate 310 as described for protrusion 292 of holding device 200.

For instance, first fin 350 has a free end 352 facing away from plate 310, free end 352 having a notch 354. Notch 354 is disposed centered to axis 348 thereby providing a guide for inserting a snap-in protrusion in first locking element 340.

Figure 8 is a sectional view of holding device 300 of Figure 7 across the section A-A. From Figure 8 it can be seen, that snap-in protrusion 334 of another, but identical holding device will fit in snap-in recess 342, and snap-in recess 342 of the other holding device will engage with protrusion 334.

Although not shown in the drawings, an assembly of a first and second holding device 300 according to the second embodiment can also be realized. Holding device 300 may be mounted to an identical holding device 300. Thereby, the height of channel 390 can be adapted by using first snap-in recess 342 or second snap-in recess 344.

Plate 110, 210, 310 may have a width W in the range of 25 to 35 millimeter and a length L in the range of 15 to 25 mm. The width of fin 132, 150, 160, 180, 232, 250, 260, 280, 332, 336 350, 360 is in the range of 0.5 to 1 millimeter, for example. The distance D1A between first fin 150 and second fin 160 is substantially the same as the width W of third fin 132 and can be in the range of 0.5 to 1 millimeter. The inner radius of channel 190, 290A, 290B, 390, for example radius R2A as shown in Figure 1, is not less than a minimum bending radius of optical fibers, for example the inner radius of channel 190, 290A, 290B, 390 is 25 mm or more. The height of channel 290A, 290B may vary between 5 mm and 20 mm depending on the assembly position of the holding devices.

Plate 110, 210, 310 is substantially in form of a sector of a ring having a central angle of 44°, for example. It is understood, that this angle can be changed if necessary. For example, the central angle could also be in the range of 30 to 90 degree or any other angle. Holding device 100, 200, 300 can be fabricated of plastic materials or fiber reinforced plastic, for example. Holding device 100, 200, 300 is preferably fabricated by injection moulding, but may also be fabricated from metal or other materials.

If used for other fibers than optical fibers, the holding device may have other dimensions. For example, the holding device may also be used for guiding cables. Such a cable holding device may have a plate with a width in the range of 80 to 120 millimeter and a length in the range of 60 to 100 millimeter. Accordingly, the dimensions of the channel and fins may be greater.

In other words, the present invention provides a fiber holder with variable capacity for optical fiber management. Up to now, there is no holder available with a variable capacity and assembling flexibility.

We do not have different parts to have different fiber capacity. The parts do not have a fixed capacity to accommodate fibers. Different capacities do not imply different part numbers to use in assembly.

The invention provides a holder which is capable of accommodating different fiber capacities, e.g. number of fibers or cross section of fibers, by using the same parts but increasing or decreasing the mounting height.

A plurality of holes is disposed on one half of a holder element, and in the other half a spherical cap or a hemisphere is disposed, for instance a single half ball. When mounting this holder element to a second holder element, one above the other, the spherical cap will enter one of the holes, allowing choosing the most favourable height for the intended application.

The holder element further comprises a hole. Fixing the holder element on a surface is achieved by using the hole (for a screw or a rivet) together with a pin to match a second hole at the surface, see Figure 3.

Thus, with a single and simple mounting, it is possible to choose different heights, thus different fiber capacities can be retained and routed according to the specific needs of the actual application.

The holder element further comprises an outer side wall that also retains the fibers where is intended to. The outer side wall is formed as a wave.

The holder allows a flexible routing of the fibers. The size of the holder element allows flexible fiber routing design in a specific construction by applying several holders on a surface.

By using the invention, significant workmanship cost reduction can be achieved. Furthermore, the repeatability of assembly can be increased, also increasing the assembly quality. The invention combines an increased flexibility and fiber capacity with a compact construction.

The use of this holder managing a high number of fibers (and fiber turns) allows to keep compact constructions instead of increased construction volume if using holder with a fixed fiber capacity. Compactness is one key drive for system design differentiation.

### List of Reference signs

- 10: assembly
- 100, 200, 300: holding device
- 110, 210, 310: plate
- 112, 312: outer edge
- 114, 314: inner edge
- 116, 316: front edge
- 118, 318: rear edge
- 120, 320: axis
- 122, 322: first direction
- 124, 324: first circular arc
- 126, 326: second circular arc
- 128, 328: third circular arc
- R1A to R4A: first radius to fourth radius
- R1B to R4B: first radius to fourth radius
- ROUT: outer radius
- 130, 230, 330: second locking element
- 132, 332: third fin
- 134, 334: snap-in protrusion
- 140, 240, 340: first locking element
- 142, 144, 146: snap-in recess
- 242, 342, 344: snap-in recess
- 148, 348: axis
- 150, 350: first fin
- 152, 352: free end
- 154, 354: notch
- 160, 360: second fin
- 170, 370: opening
- 180, 280: guiding fin
- 182: face
- 184, 338: fourth circular arc
- 190, 290A, 290B, 390: channel
- 294: slit
- 336: additional fin
- W: width
- L: length
- H, H0: height of plate
- H1, H2: height of channel
- D1A, D1B: first distance
- D2A, D2B: second distance

## Claims

1. Holding device (100; 300) comprising:
a plate (110; 310),
a first fin (150; 350) on the plate (110; 310),
a second fin (160; 360) on the plate (110; 310), wherein the second fin (160; 360) is disposed parallel and opposite to the first fin (150; 350),
a third fin (132; 332) on the plate (110; 310), wherein the third fin (132; 332) is disposed parallel to the first fin (150; 350) and wherein the third fin (132; 332) is displaced from a position that is between the first fin (150; 350) and the second fin (160; 360) along the lengthwise direction of the third fin (132; 332).

2. Holding device (100; 300) according to claim 1, wherein the first fin (150; 350) runs along a curve on the plate (110; 310).

3. Holding device (100; 300) according to claim 1 or 2, wherein
the first fin (150; 350) is disposed on the plate (110; 310) along a part of a first circle,
the second fin (160; 360) is disposed on the plate (110; 310) along a part of a second circle being concentric to the first circle,
the third fin (132; 332) is disposed on the plate (110; 310) along a part of a third circle being concentric to the first circle; wherein the third fin (132; 332) is displaced in circumferential direction of the third circle.

4. Holding device (100; 300) according to claim 3, wherein the first circle has a first radius (R1A; R1B), the second circle has a second radius (R2A; R2B) and the third circle has a third radius (R3A; R3B), and wherein
the first radius (R1A; R1B) is smaller than the third radius (R3A; R3B) and the third radius (R3A; R3B) is smaller than the second radius (R2A; R2B) or
the second radius is smaller than the third radius and the third radius is smaller than the first radius.

5. Holding device (100; 300) according to one of claims 1 to 4, further comprising:
a fourth fin (180; 336) disposed on the plate (110; 310) parallel to the first fin (150; 350) and opposite to the third fin (132; 332).

6. Holding device (100) according to claim 5, wherein the first fin (150) and the second fin (160) are spaced apart by a first distance (D1A) and wherein the third fin (132) and the fourth fin (180) are spaced apart by a second distance (D2A), wherein the second distance (D2A) is at least several times greater than the first distance (D1A).

7. Holding device (300) according to claim 5, wherein the first fin (350) and the second fin (360) are spaced apart by a first distance (D1B) and wherein the third fin (332) and the fourth fin (336) are spaced apart by a second distance (D2B), wherein the second distance (D2B) is in a range of 70 percent to 99 percent of the first distance (D1B).

8. Holding device (100; 300) according to one of claim 1 to 7 , further comprising:
at least a first snap-in recess (142; 342) and a second snap-in recess (144; 344), wherein the first snap-in recess (142; 344) and the second snap-in recess (144; 344) are disposed on a side of the first fin (150; 350), the side facing the second fin (160; 360), and
a snap-in protrusion (134; 334) disposed on a side of the third fin (132; 332),
wherein the holding device (100; 300) can be mounted to an identical second holding device, the second holding device being turned upside down,
wherein, when mounted, the first snap-in recess (142; 342) or the second snap-in recess (144; 344) of the holding device (100; 300) is connected to the snap-in protrusion of the second holding device in a form fitting fashion, and
the snap-in protrusion (134; 334) of the holding device (100; 300) is connected to the first snap-in recess or the second snap-in recess of the second holding device in a form fitting fashion.

9. Holding device (100; 300) according to claim 8, wherein the first fin (150; 350) further comprises
a notch (154; 354) at the free end of the first fin (150; 350).

10. Holding device (100; 300) according to one of claims 1 to 9, wherein the plate (110; 310) further comprises:
an opening (170; 370); and
a protrusion (292) extending from the plate (110; 310) and facing away from the first fin (150; 350).

11. Assembly (10) of
a first holding device (100; 300) comprising:
a first plate (110; 310),
a first fin (150; 350) being disposed on the plate (110; 310), and
a second fin (160; 360) on the plate (110; 310), wherein the second fin (160; 360) is disposed parallel and opposite to the first fin (150; 350);
and a second holding device (200; 300) comprising:
a second plate (210; 310), and
at least one fin (232; 332) being disposed on the second plate (210; 310);
wherein the second holding device (200; 300) can be mounted to the first holding device (100; 300), wherein, when mounted, the at least one fin (232; 332) is disposed between the first fin (150; 350) and the second fin (160; 360) of the first holding device (100; 300) and the at least one fin (232; 332) is in contact with at least the first fin (150; 350), thereby forming a channel (290; 390) between a part of the first plate (110; 310) and a part of the second plate (210; 310).

12. Assembly (10) according to claim 11, wherein the second holding device (200; 300) further comprises:
an additional fin (280; 336) being disposed on the second plate (210; 310), wherein the additional fin (280; 336) is disposed parallel and opposite to the at least one fin (232; 332);
wherein, when mounted to the first holding device (100; 300), the additional fin (280) is not in contact with the second fin (160) or
the additional fin (336) is in contact with the second fin (360).

13. Assembly (10) according to claim 11 or 12, wherein the first holding device (100; 300) further comprises at least a first snap-in recess (142; 342) and a second snap-in recess (144; 344) being disposed on the first fin (150; 350) on a side facing the second fin (160; 360);
and wherein the second holding device (200; 300) further comprises a snap-in protrusion (234; 334) being disposed on a side of the at least one fin (232; 332);
wherein the second holding device (200; 300) can be mounted to the first holding device (100; 300) in a form fitting fashion in at least two different positions, wherein the snap-in protrusion (234; 334) engages in the first snap-in recess (142; 342) or the snap-in protrusion (234; 334) engages in the second snap-in recess (144; 344).

14. Assembly (10) according to one of claims 11 to 13, wherein
the first holding device (100) is a holding device according to one of claims 1 to 10 and
the second holding device (200) is a holding device according to one of claims 1 to 10.

15. Assembly (10) according to one of claims 11 to 14, wherein
the first holding device (100) and the second holding device (200) are structurally identical devices.
